# EUROPEAN PATENT APPLICATION

(11) **EP 4 183 463 A1**
(43) Date of publication of application: **24.05.2023**
(21) Application number: 21306630.1
(22) Date of filing: 23.11.2021
(51) Int. Cl.: B01D 11/02, C10M 175/00, C10G 21/08, C10G 71/00, C10N 40/25, C10N 40/26

(54) **METHOD FOR REGENERATING USED LUBRICANTS USING SUPERCRITICAL CO2**

(71) Applicant: TotalEnergies OneTech, 92400 Courbevoie (FR)
(72) Inventor: DE FEO, Modestino, 69360 SOLAIZE (FR); REVERCHON, Ernesto, 84084 FISCIANO (IT); BALDINO, Lucia, 84084 FISCIANO (IT)
(74) Representative: Cabinet Nony

(57) **Abstract**

The present invention relates to a process for regenerating a used lubricant composition, especially used for regenerating an engine drain oil, comprising the steps of:
- fractionating said used lubricant composition in a countercurrent fractional distillation column with a countercurrent flow of supercritical carbon dioxide (sCO₂), wherein said used lubricant composition and supercritical CO₂ are fed in the countercurrent column with a ratio of the _{S}CO₂ flow rate on used lubricant flow rate ranging from 15 to 50; and
- recovering the regenerated oil extracted within the supercritical CO₂.

It further relates to a process for preparing a lubricant composition from a regenerated base oil obtained according to the invention.

## Description

### Field of the Invention

The present invention relates to the field of regenerating used lubricant compositions. The present application more particularly concerns a method of regenerating a used lubricant composition to produce a regenerated oil which can be incorporated as a base oil to prepare a fresh lubricant composition.

### Background

Lubricant compositions, also called "lubricants", are commonly employed in mechanical systems with the main aim of reducing the forces of friction between the various moving metallic components and for preventing premature wear or even damage of these components, and in particular of their surface. For example, they are employed in various systems of motor vehicles, including engine, transmission and hydraulic circuit.

However, when the lubricant composition aged, deteriorated and oxidized, it loses efficiency and become "used lubricant", also called "waste lubricant", "aged lubricant" or "degraded lubricant". Thus, lubricants require change after a certain duration of utilization. Furthermore, due to various impurities generated from the lubricating operation, waste lubricant is a serious threat to the water, environment and can be very posing severe hazards to human health in the long run if it is not disposed of properly.

On another hand, it is well known that large quantities of petroleum-derived oil are used for formulating lubricants. Further, the manufacture of lubricating oil is the most energy-intensive process in a crude oil refinery. Typically, to extract 1 Liter of lubricating oil, 37 Liters of crude oil are required.

Thus, to the interest of environmental protection and resource conservation, and as the petroleum shortage is becoming a global problem nowadays, it is desirable to develop methods for re-refining or reconditioning used lubricants.

Such reconditioning is usually required before reuse since the used oil contains degradation products derived from the oil itself or from additives therein, as well as particles of metal, metal oxides and the like from the engine or other machinery. Aged oil thus contains a multitude of contaminating elements since nearly all the groups in the periodic classification can be represented, as will be illustrated below.

In addition to the variety of elements present and the wide range of their concentrations in the oil, the fact that each oil has a different source and is thus contaminated in a different way must be taken into account in order to appreciate the difficulty of the problem to be solved. Thus, large quantities of complex mixtures of oils have to be treated.

Due to this complexity, there is no existing single process or technology that can achieve all requirements needed for the regeneration of used lubricants. The conventional systems usually combine two or more processes to regenerate used lubricants into an acceptable quality.

Waste lubricants have long been re-refined to base oils using sulfuric acid to separate contaminants from useful hydrocarbon components followed by treatment with clay. This Sulphuric acid-clay technology is the principal process used commercially for regeneration of used lubricant oil as it is attractive economically. However, the waste oil is treated with 98% sulphuric acid that can produce large amounts of highly toxic, environmentally hazardous, acid and clay sludge.

Thus, several other technologies have been developed to recycle waste lubricating oils, which generally involve collection, filtration, dehydration, distillation, hydrotreatment, liquid-liquid extraction.

For example, the application EP 0 708 174 concerns a process for purifying spent oils which does not use acids or adsorbents, comprising steps of dehydration, vacuum distillation, solvent extraction and hydrotreatment. However, vacuum distillation and the combination of vacuum distillation and hydro finishing technology are costly; added to this is the fact that the extraction step requires a solvent.

In other words, many conventional technologies used today may create other environmental problems, such as inefficient use of energy and chemicals as well as the generation of harmful wastes during the process or require a high cost technology.

Current environmental concerns result in a need to develop an efficient and more environmentally friendly solution to recondition waste lubricant oil.

For this reason, use of supercritical fluid extraction (SFE) technology appears as very potential and environmentally friendly over other conventional methods for recovering waste lubricants. Supercritical carbon dioxide (CO2) is a particularly interesting solvent given its high dissolution power, low cost, non-flammable and is environmentally friendly. In addition, the temperature and pressure critical conditions (Tc = 32°C and Pc = 74 bars) are easily accessible.

A method for treating an oil using a liquid in a supercritical state has already been described in the application EP 1 165 728, said method essentially comprising an initial stage, wherein the oil is separated into a light fraction, a heavy fraction and an intermediate majority fraction within an extraction column, followed by treatment of the intermediate fraction in separation and/or reaction stages.

Mention may also be made of the document KR 101016348 that describes a method for separating radioactive contaminants from a waste oil, especially a radioactive waste oil generated in the nuclear power industry, comprising a dissolution step of supercritical solvent to the dehydrated waste oil, then filtration through a separation membrane. Document CN 102766479 also proposes a method for decolorizing and refining lubricating oil using a supercritical fluid.

### Summary of the invention

The aim of the present invention is to provide a novel method making it possible to efficiently regenerate or "re-refine" a used lubricant, in particular an engine used lubricant, in an environmentally friendly manner, to produce oil capable of further use as a base oil for lubricant.

The present invention thus relates, according to a first of its aspects, to a process or method for regenerating a used lubricant composition, said process comprising the steps of:
- fractionating said used lubricant composition in a countercurrent fractional distillation column with a countercurrent flow of supercritical carbon dioxide (sCO₂),
   wherein said used lubricant composition and supercritical CO₂ are fed in the countercurrent column with a ratio of the sCO₂ flow rate on lubricant flow rate ranging from 15 to 50; and
- recovering the regenerated oil extracted within the supercritical CO₂.

More particularly, during the fractionation according to the invention, the used lubricant composition is injected into countercurrent column from the upper part, whereas supercritical CO₂ flows through column from below. The substances forming the regenerated oil which separates within CO₂ are removed from the extract exiting column topside.

For the purposes of the present invention, the terms "used lubricant composition" (also referred to more simply as "used oil") or "waste lubricating composition" are intended to denote a lubricant composition which has been used for lubricating parts, in particular mechanical parts, of a mechanical system, such as bearings, gears, engines.

The used lubricant composition may be of various sources. In particular, it can be an engine used lubricant oil. Having regard to their origin, the used lubricant compositions applied in the invention, in particular engine lubricant compositions, have a high content of a multitude of contaminating elements, especially of calcium (Ca), iron (Fe), magnesium (Mg), sodium (Na), nickel (Ni), phosphorus (P), silicon (Si), zinc (Zn), etc.

In contrast to "used lubricant composition", for the purposes of the present invention, the expression "fresh lubricant composition" is intended to denote a lubricant composition which has not yet been used for lubricating parts of a mechanical system, and which is ready to this use.

Preferred conditions to implement the fractionation step in the countercurrent column in accordance with the invention will be given in the remainder of the text.

The process of the invention to re-refine used lubricants proves to be advantageous in several respects.

First, it advantageously takes advantage of the supercritical technology to regenerate used oils with a single-step process without using any solvent.

Thus, the process according to the invention advantageously does not require the use of any additional solvent. In particular, it does not comprise any solvent extraction step. By solvent extraction is meant any liquid/liquid extraction step.

The regenerated oil may be recovered by simply removing CO₂ from the sCO₂ extract obtained from the fractional distillation step according to the invention. Advantageously, the supercritical CO₂ (also noted "sCO₂" in the rest of the text) can be easily recycled by regenerating it at room temperature.

Thus, the process according to the invention to regenerate waste lubricant oils is particularly eco-friendly. It is advantageously easy to implement, economical, hazard-free and does not use toxic products.

Further, the process of the invention advantageously makes it possible to achieve a relatively high yield of high quality regenerated oil.

The regenerated oil retrieved from the fractionation with sCO₂ countercurrent flow according to the invention is advantageously suitable for reuse as base oil without additional processing.

The recovered oil obtained by the process of the invention will be referred to, interchangeably, as "recovered" or "regenerated" or "re-refined" base oil.

As illustrated in the examples below, the inventors have demonstrated that the oil retrieved from fractionation with sCO₂ countercurrent flow in accordance with the invention exhibits significantly reduced content of undesirable contaminants compared to the used lubricant oil.

In particular, the recovered oil is freed from a major part of contaminating elements, such as those deriving from the fuel or degradation of the lubricant, in particular heavy metallic elements.

Advantageously, the regenerated oil according to the process of the invention contains less than 100 ppm of metallic elements, preferably less than 50 ppm of metallic elements.

In a particularly advantageous way, as shown in the examples, the inventors have discovered that it is possible, by varying the fractionation steps conditions, especially the pressure conditions, to advantageously achieve a selective elimination of different contaminating elements, especially of phosphorous and silicon.

Thus, according to a particularly advantageous embodiment, the method for regenerating a used lubricant composition may comprise consecutive fractionation steps in sCO₂ countercurrent flow conditions according to the invention, that are conducted in different temperature and/or pressure conditions, for example in several distillation columns arranged in series.

According to particularly advantageous embodiment, the process of the invention allows the content of phosphorus element (P) to be reduced to a value less than or equal to 100 ppm, preferably less than or equal to 50 ppm, more preferably less than or equal to 40 ppm. According to particularly advantageous embodiment, the process of the invention allows the content of silicon element (Si) to be reduced to a value less than or equal to 100 ppm, preferably less than or equal to 50 ppm, more preferably less than or equal to 40 ppm.

Thus, when employing a method of the invention, regenerated base oil comparable in overall quality to hydrotreated base oil or base oil resulting from any other known finishing process, is readily achievable, but with an economically and environmentally friendly way. Advantageously, the process of the invention thus affords as a product regenerated base oil roughly comparable in properties to that of virgin oils (i.e. newly refined lubricating oil) and satisfying the quality standards, *i.e.* oils which may be equivalent to those obtained from by refining crude oils.

The process of the invention is particularly advantageously to regenerate used lubricants that are generally difficult to re-refine, such as engine drain oils, in particular two-stroke engine drain oils and more particularly from marine two-stroke engines, which are submitted to phenomena of combustion during their use.

Thus, according to another aspect, the invention relates to the use of the process or method according to the invention as defined above and detailed hereafter, for regenerating an engine drain oil, in particular a two-stroke engine drain oil and more particularly a marine two-stroke engine drain oil.

The oil retrieved by the process of the invention thus becomes a finished base oil of high quality suitable for sale as such or for post finishing fractionation into different viscosity grades, or for compounding with additives to make a finished lubricant composition. Thus, the present invention also describes the use of a regenerated oil retrieved from the process according to the invention for formulating a fresh lubricating composition, in particular by combining it with at least one conventional additive for lubricants.

The present invention also relates to a process or method for preparing a lubricant composition comprising at least the steps of:
(i) recovering a base oil from a used lubricant composition by implementing a process of regeneration according to the invention as defined hereabove; and
(ii) adding to said regenerated base oil at least one additive, preferably chosen from friction modifying additives, extreme pressure additives, anti-wear additives, detergents, antioxidants, viscosity index (VI) improvers, pour point depressants (PPDs), dispersants, antifoaming agents, thickeners, and mixtures thereof.

Such a process advantageously enables to formulate fresh lubricants with a low-carbon footprint as it is prepared from re-refined base oil retrieved from the eco-friendly regeneration process of the invention.

Other characteristics, alternative forms and advantages of the process for regenerating used lubricant compositions according to the invention will emerge more clearly on reading the description and the examples which will follow, given by way of illustration and without limitation of the invention.

In the continuation of the text, the expressions "between... and...", "ranging from... to..." and "varying from... to..." are equivalent and are intended to mean that the limits are included, unless otherwise mentioned.

Unless otherwise indicated, the expression "comprising a" or "comprising an" should be understood as "comprising at least one".

### Brief description of the drawings

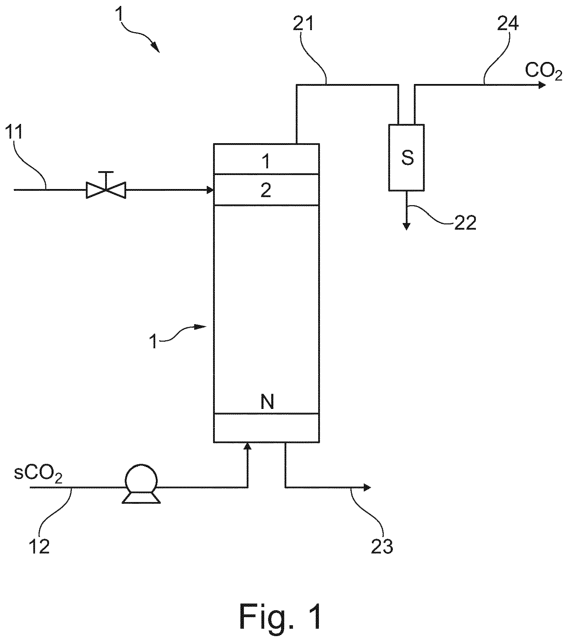

[Fig 1] shows a schematic representation of the fractionation plant as used in the examples for conducting the process of the invention with a countercurrent fractional distillation column (1). The device is presented in block schematic form, without enumeration of the pumps, valves, heat exchangers or other equipment which one of ordinary skill in the art will recognize as necessary for implementing the regeneration process of the invention.

### Detailed description of the invention

### PROCESS FOR REGNERATING A USED LUBRICANT

As mentioned here-above, the process for regenerating a used lubricant composition according to the present invention is based on a fractionation step of the used lubricant composition in a countercurrent fractional distillation column with a sCO₂ countercurrent flow.

### Used lubricant

The method of the invention is applicable to any used lubricants (also referred to as "used oils"), in which the major constituent is one or more base oils of lubricating viscosity, such as synthetic or natural mineral oils, animal or vegetable oils or mixtures thereof.

Such base oils may in particular be oils of mineral or synthetic origin belonging to groups I to V according to the classes defined in the API classification (or their equivalents according to the ATIEL classification) and presented in the table below, or mixtures thereof.

**[Tableau 1]**

| | Saturates content | Sulphur content | Viscosity index (VI) |
|---|---|---|---|
| Group I Mineral oils | < 90% | > 0.03% | 80 ≤ VI < 120 |
| Group II Hydrocracked oils | ≥90% | ≤0.03% | 80 ≤ VI < 120 |
| Group III Hydrocracked or hydro- isomerized oils | ≥90% | ≤0.03% | ≥ 120 |
| Group IV | Polyalphaolefins (PAO) | | |
| Group V | Esters and other bases not included in groups I to IV | | |

The used lubricant composition to be regenerated by a process according to the invention may comprise more than 50 wt.% of base oil(s) relative to its total weight, in particular more than 60 wt.% of base oil(s), and more particularly between 60 and 99 wt.% of base oil(s). The process of the invention is particularly advantageous for re-refine used lubricants incorporating base oil(s) of group(s) ≥ II, in other words comprising one or more oil(s) of groups II, III, IV and/or V, in particular of groups II and/or III.

According to a particular embodiment, the used lubricant composition can be a lubricant employed for an engine, for example a used lubricant of vehicle or marine engines, for example of heavy duty, off road or marine engines.

The used lubricant composition may also contain various additives classically used in lubricant compositions such as friction modifying additives, extreme pressure additives, anti-wear additives, detergents, antioxidants, viscosity index (VI) improvers, pour point depressants (PPDs), dispersants, antifoaming agents, thickeners, and mixtures thereof. The properties of the used lubricant composition are degraded resulting from its use for a greater or lesser period for lubricating mechanical parts, in particular in an internal combustion engine.

The used lubricant composition implemented in the process of the invention may thus comprise one or more of these additives and impurities resulting from the degradation of additives originally present in the lubricant composition or resulting from the wear of the lubricated mechanical parts.

For example, friction modifying additives may provide transition metals to the used lubricant, such as Mo, Sb, Sn, Fe or Zn; antioxidants may provide phosphorus to the used lubricant; detergents may provide alkali metals or alkaline-earth metals to the used lubricant, such as Ca, Mg, Na or Ba; dispersants may provide boron to the used lubricant and antifoaming agents may provide silicon to the used lubricant.

Thus, as shown for the used lubricants in the examples, used lubricant compositions contain a multitude of contaminating elements, in particular a variety of metallic elements.

The composition of the used lubricant may of course be different depending on the origin of the lubricant, of its initial composition and of the fact that it may have been contaminated in a different way depending on its use.

### Optional prior treatments

According to a particular embodiment, the used lubricant may be first subjected, prior to the fractionation step, to one or more steps of pre-treatment, preferably including one or more steps of dehydration, filtration and/or distillation. This pre-treatment makes it possible to remove water, solid particles and/or a portion of the volatile low boiling components unsuitable for incorporating in lubricants.

Preferably, the process of the invention may thus comprise at least one prior dehydration step. This dehydration step allows removing entrained water in the lubricant. Advantageously, the used lubricant when subjected to the fractionation step according to the invention thus comprises less than 10 % by weight of water, in particular less than 5 % by weight of water and more particularly less than 2 % by weight of water, especially less than 1 % by weight of water, relative to the total weight of the used lubricant.

This optional dehydration step can be conducted using any method known to persons skilled in the art. For example, it can be performed by decanting, heating or passing warm dry air over the lubricant.

According to an embodiment, the dehydration may be carried out at a temperature of between 50°C and 250°C, preferably between 100°C and 200°C. In particular, it can be conducted at a pressure of between 50 000 and 150 000 Pa, preferably at atmospheric pressure.

Advantageously, the process of the invention may comprise at least one prior step of filtering the used lubricant composition. Such a filtration mainly aims at removing solid particles from the used lubricating composition which could affect the operation of the counter-current column.

The filtration can be conducted using any method known to persons having ordinary skilled in the art, for example through a sieve or using systems of diatomaceous earth type.

Advantageously, the method of the invention may comprise one or more prior distillation step(s) of the used lubricant composition. The distillation step(s) can be carried out using any technique known to persons having ordinary skills in the art.

Examples of distillations that can be performed on used lubricant composition are atmospheric distillation and vacuum distillation.

The distillation(s) can more particularly be implemented at a temperature ranging from 100°C to 500°C, preferably from 200°C to 400°C, and more preferably from 300°C to 380°C, and preferably, at a pressure ranging from 25 to 2000 Pa, preferably from 50 to 1000 Pa, in particular from 50 to 250 Pa.

According to one embodiment, the used lubricant composition may be submitted, prior to the fractional distillation step with sCO₂ countercurrent flow, at least to:
- a dehydration step, preferably conducted at between 100°C and 200°C, such as about 160°C, and at atmospheric pressure; followed by
- a distillation step, preferably conducted at a temperature of between 300°C and 400°C, such as about 360°C, and a pressure of between 50 and 200 Pa, such as about 100 Pa.

Optionally, the used lubricant composition may also be submitted, prior to the fractional distillation step with sCO₂ countercurrent flow, to a step of passing the used lubricant composition over an adsorbent support, also referred to more simply as "adsorbent", leading to the selective adsorption on the support of aromatic compounds, in particular of polycyclic aromatic hydrocarbons (PAHs).

Adsorbents which can be used include, in particular, activated carbons, zeolites, clay or functionalized porous compounds.

According to one embodiment, within a process according to the invention, the fractionation step may be preceded by one or more dehydration and/or distillation step(s), followed by a step of passing the used lubricating composition over activated carbon.

In the below description, when reference is made to the used or waste lubricant, it is understood that said used or waste lubricant may have been preliminarily submitted to one or more prior step(s) as described above, in particular of dehydration, filtration and/or distillation.

These prior steps are optional.

Thus, according to an advantageous embodiment, the method for regenerating a used lubricant composition does not comprise any additional step of pre-treatment of the used composition, in particular of dehydration, filtration and/or distillation, prior to the fractionation step.

### Fractionation step with sCO₂ countercurrent flow

As mentioned above, the regeneration of used lubricant composition according to the process of the invention relies on a fractionation step of said used lubricant in a countercurrent fractional distillation column with a countercurrent flow of supercritical CO₂.

The fractionation conducted according to the invention thus contacts counter currently the used lubricant composition and supercritical CO₂, thereby operating a liquid-supercritical CO2 extraction step.

As mentioned above, the fractionation step according to the process of the invention is performed by feeding the used lubricant and supercritical CO₂ into the countercurrent column with a ratio of sCO₂ flow rate on used lubricant flow rate (sCO₂ flow rate/used lubricant flow rate) ranging from 15 to 50.

In a more preferred embodiment, the ratio of sCO₂ flow rate on used lubricant flow rate ranges from 20 to 50, more preferably from 25 to 45, and particularly from 27 to 45. Preferably, the used lubricant and sCO₂ are introduced in the fractionation column with controlled flow rates so that the ratio sCO₂ flow rate/used lubricant flow rate is maintained within the desired range.

By way of example, in a laboratory scale counter-current column, the used lubricant may be fed into the countercurrent column with a flow rate, ranging from 0.01 to 50 mL/min, in particular from 1 to 5 mL/min.

By way of example, at a laboratory scale, the sCO₂ may be fed into the countercurrent column with a flow rate ranging from 0.01 to 50 kg/h, such as from 1 to 5 kg/h.

The flow rate conditions can be easily transposed on an industrial scale, by maintaining the desired ratio of sCO₂ flow rate on used lubricant flow rate as specified hereabove.

Preferably, the fractionation step in the countercurrent column in accordance with the invention is performed at a temperature ranging from 40°C to 200°C, in particular from 50°C to 150°C, preferably from 50°C to 100°C.

Preferably, it is performed at a pressure ranging from 50 to 300 bars, in particular from 100 to 250 bars, preferably from 100 to 200 bars.

According to a particularly preferred embodiment, the fractionation step is implemented at a temperature ranging between 50 and 150°C and at a pressure ranging between 100 and 250 bars.

The temperature and pressure of the fractionation step can act on the affinity of the compounds in the two phases (liquid and supercritical phases) processed in the fractionation column, and thus to the mass transfer between the two phases in contact inside the fractionation column.

Without wishing to be bound by the theory, the fractionation with sCO₂ countercurrent flow according to the invention advantageously separates the base oil material that is transferred within the sCO₂ stream in the column, from the degraded parts and impurities especially contaminating elements, which constitute the heaviest fraction and settle to the bottom of the column, thereby leaving a relatively purified oil at the top of the column.

As illustrated in the examples, the inventors have surprisingly discovered that, by adjusting the fractionation conditions, especially the pressure conditions, it is possible to achieve, with the fractionation process according to the invention, selective reduction of the content of some contaminating elements.

This is particularly advantageous to freed the used lubricating composition from some elements that are known to be difficult to eliminate, such as phosphorus and silicon.

By way of examples, performing the fractionation step in the countercurrent column in accordance with the invention at a pressure ranging from 100 to 150 bars allows more specifically lowering the phosphorus content, while performing the fractionation step in the countercurrent column in accordance with the invention at a pressure ranging from 160 to 200 bars allows more specifically lowering the silicon content.

Preferably, the fractional distillation according to the invention is implemented in a packed column, namely a column filled, or "packed", with a material allowing the oil to flow down over a packing surface in contact with the upward sCO₂ flow, thus increasing the contact surface between the oil phase and the sCO₂ phase. The packed column can contain either structured or random packing of a conventional type known to those skilled in the art. Preferably, the countercurrent column is filled with metallic packings.

Advantageously, the sCO₂ countercurrent flow fractionation step of the process according to the invention may thus be conducted in a countercurrent column having multiple theoretical plates and comprising metallic packings.

As represented schematically in Figure 1, for implementing the fractionation of the used lubricant in the conditions of countercurrent flow of sCO₂, said used lubricant and sCO₂ are injected continuously and counter-currently into the fractional distillation column (1). More particularly, for the extraction process in the counter-current column, the used lubricant composition (11) is introduced in the upper part of the column (1), thus circulates in a descending manner in the column, while the supercritical CO₂ (12) is fed from the bottom part of the column (1) and circulates in an ascending manner.

The upper part (respectively the bottom part) of the column is defined by the part located between the top of the column (respectively the bottom of the column) and the middle of the column. Preferably, the used lubricant composition is fed in the upper part of the column, and the sCO₂ from the bottom of the column.

The used lubricant can for example be injected, out of a feeding tank (not represented in Figure 1), into the upper part of counter-current column. The system for feeding the used lubricant can be of any type known to the person skilled in the art, provided that it makes it possible controlling the lubricant flow rate that enters in the fractionation column. For example, the system for feeding the used lubricant into the column may be equipped with a pump such as a membrane pump, an impulse pump, a velocity pump, a gravity pump, a steam pump or a valveless pump.

Preferably, the used lubricant is fed into the column through a membrane pump. This membrane pump is especially suitable to deliver the used lubricant with the desired flow rate.

The sCO₂ feed may be prior obtained by compressing gaseous CO₂ in appropriate conditions of temperature and pressure.

### Recovered regenerated oil

The regenerated oil (22) can be more particularly removed from the extract (21) that exits the counter-current column topside.

In particular, the regenerated base oil can be retrieved from the extract by eliminating CO₂, preferably by a simple pressure-let-down. The counter-current column can thus be directly connected with separation tanks, in which extracted substances are collected and can be retrieved when depressurizing.

The eliminated CO₂ (24) may be recovered and recycled after being reconditioned in supercritical state to be re-introduced in the countercurrent column.

Following elimination of the sCO₂, a finished base oil is obtained that is suitable for sale as such or for post finishing into different viscosity grades, and/or for compounding with additives to make a finished lubricating composition.

As mentioned above, the regenerated oil obtained from the fractionation step conducted in the sCO₂ counterflow conditions of the invention is advantageously freed of a significant part of its impurities, especially of most of the metallic compounds usually contained in the degraded lubricants.

In particular, the regenerated oil retrieved from the fractionation with sCO₂ according to the invention contains less than 100 ppm of metallic elements, preferably less than 50 ppm of metallic elements.

Preferably, the process of the invention allows the content of calcium (Ca), of iron (Fe), of magnesium (Mg), of sodium (Na), of nickel (Ni) and/or of zinc (Zn), to be reduced to a value less than 20 ppm, in particular less than 10 ppm.

The recovered oil advantageously has a kinematic viscosity measured at 100°C according to ASTM D445 between 2 and 8 mm²·s⁻¹, in particular between 3 and 6 mm²·s⁻¹.

### Consecutive fractionation step

According to an advantageous embodiment, the fractionation step in sCO₂ countercurrent flow conditions may be repeated at least twice, for example 2, 3 or 4 times.

Preferably, the fractionation step in sCO₂ countercurrent flow conditions as detailed above is repeated twice. Thus, the regenerated oil recovered from a first fractionation step as described hereabove may be subjected to at least a subsequent second fractionation step in sCO₂ countercurrent flow conditions.

According to a particular embodiment, the process for regenerating a used lubricant composition according to the invention may thus comprise at least:
(a) a first step of fractionating said used lubricant composition in a countercurrent fractional distillation column with a countercurrent flow of sCO₂, then recovering the oil extracted within the sCO₂; and
(b) a second step of fractionating the oil retrieved from the first fractionation in a countercurrent fractional distillation column with a countercurrent flow of sCO₂, then recovering the final regenerated oil extracted within the sCO₂.

The additional fractionation step(s), in particular the second fractionation step (b), may be performed within the same fractional distillation column as the one used for the first fractionation step (a) or within another fractional distillation column; the different fractional distillation columns may for example be arranged in series.

The second fractionation step (b), and more generally the additional fractionation steps, may be performed or not under the same conditions, in particular in terms of temperature and pressure, as those for the first fractionation step (a) or under different conditions. According to a preferred embodiment, the second fractionation step (b) is conducting in temperature and pressure conditions that are different from the ones for conducting the first fractionation step (a).

Preferably, the temperature and pressure conditions for conducting each of the fractionation steps according to the invention can be adjusted so that each fractionation step makes it possible to achieve a selective elimination of some contaminating elements, especially of contaminating elements that are particularly difficult to remove, and more particularly of silicon and phosphorous.

For example, one of the fractionation steps may selectively lower some targeted contaminating element(s) and the other fractionation step may selectively lower other contaminating element(s).

According to a particular embodiment, the temperature and pressure conditions for conducting one of the fractionation steps can be adjusted to enable lowering, besides other contaminating elements, the specific content of phosphorous, while the temperature and pressure conditions for conducting another fractionation step can be adjusted to enable lowering, besides other contaminating elements, the specific content of silicon.

According to a particularly preferred embodiment, the process for regenerating a used lubricant composition according to the invention may comprise:
- a first fractionation step performed at a temperature ranging from 40°C to 200°C, in particular from 50°C to 150°C, preferably of about 60°C; and at a pressure ranging from 50 to 150 bars, in particular from 100 to 150 bars, preferably of about 120 bars; and
- a second fractionation step performed at a temperature ranging from 40°C to 200°C, in particular from 50°C to 150°C, preferably of about 60°C; and at a pressure ranging from 150 to 300 bars, in particular from 160 to 200 bars, preferably of about 180 bars.

The first and second fractionation steps may be performed or not in this order.

As mentioned above, according to particularly advantageous embodiment, the process of the invention allows the content of phosphorus element (P) to be reduced to a value less than or equal to 100 ppm, preferably less than or equal to 50 ppm.

Also, according to particularly advantageous embodiment, the process of the invention allows the content of silicon element (Si) to be reduced to a value less than or equal to 100 ppm, preferably less than or equal to 50 ppm.

### Additional processing steps

Optionally, additional processing steps may be performed such as distillation step(s) and/or passing the regenerated base oil over an adsorbent support such as activated carbon.

Such additional treatments are however not required in the process of the present invention to achieve a regenerated oil of the desired quality, that is an oil that can be reused as a base oil.

These additional subsequent stages may be performed in the conditions as detailed above for the optional steps prior to the fractionation step with sCO₂.

Advantageously, a process according to the invention does not comprise any additional step of cross-flow filtration of the recovered oil obtained from the fractionation step. Advantageously, a process according to the invention does not comprise any additional processing step of the recovered oil obtained from the fractionation step.

Finally, the distillation residue or heavy fraction (23) which designates the ingredients that have not been extracted within the sCO₂, containing the undesirable contaminants, including metallic elements originally present in the used lubricant, can be removed, in particular in a continuous way, from column bottom side.

The obtained impurities and degraded parts can be optionally valorized by traditional pathways and reused for example as bituminous component for the manufacture of roads, seals and others.

### Preparation of a fresh lubricating composition

As mentioned above, the method of the invention enables reaching a regenerated oil that can be reused as a base oil to formulate a fresh lubricant composition.

According to a particularly advantageous embodiment, the process of the invention can be implemented to regenerate engine drain oils, such as two-stroke engine drain oils and more particularly marine two-stroke engine drain oils.

According to another aspect, the present invention relates to a method for preparing a fresh lubricant composition comprising at least the steps of (i) recovering a regenerated base oil from a used lubricant composition according to the process of regeneration of the invention, as detailed hereabove, and (ii) supplementing said regenerated base oil with at least one additive.

The additive(s) may be of any type suitable for use in a lubricant and chosen with regard to the destination of the lubricant.

The regenerated base oil can also be blend with one or more virgin base oil(s) (i.e. newly refined lubricating oil that have been never used in lubricants).

The regenerated base oil can be reused to formulate lubricants for various lubricating mechanical systems, such as bearings, gears or the different mechanical parts of an engine. In particular, the recovered base oil of the invention may be used for formulating lubricants for drive systems, such as the transmission or the engine in a drive system, in particular for heavy or light vehicles or marine engines such as two-stroke marine engines.

The additives may be introduced individually and/or in the form of a mixture like those already on sale for the commercial formulations of lubricants for vehicle engines, with a level of performance as defined by the ACEA (European Automobile Manufacturers Association) and/or the API (American Petroleum Institute), which are familiar to a person skilled in the art.

These additives may in particular be selected from friction modifying additives, extreme pressure additives, anti-wear additives, detergents, antioxidants, viscosity index (VI) improvers, pour point depressants (PPDs), dispersants, antifoaming agents, thickeners, and mixtures thereof.

These additives may be added to a regenerated base oil obtained from the fractionation distillation process of the invention in an amount that can be determined by one having ordinary skills in the art.

The method of the invention thus enables formulating lubricant compositions with a low-carbon footprint as they are first prepared from regenerated (or re-refined) base oil and not from a newly refined lubricating oil, and secondly, said regenerated base oil derives from the eco-friendly process of regeneration of the invention.

The following examples are provided as illustration and in no way limit the scope of this invention.

### Examples

### Protocols used in the examples

### Method of the invention for regenerating a lubricant oil

The regeneration of a used oil is implemented by a process according to the invention, with a laboratory pilot comprising, as represented on Figure 1, a countercurrent fractional distillation column (1), a sCO₂ supply system to inject sCO₂ (12) with a controlled rate at the bottom of the countercurrent column, a liquid supply system to introduce with a controlled rate the aged lubricant composition (11) in the upper part of the column.

The fractional distillation column is 2400 mm height with an inner diameter of 17.5 mm. All parts are made in AISI 316 stainless steel and are designed to withstand up to a maximum internal pressure of 70 MPa at 30°C. The column is filled with stainless steel bell packings, having a nominal size of 5 mm a specific surface of with 1600 m⁻¹ and a porosity of 0.9. Temperature along the column can be controlled by automatic controllers.

The aged lubricant (11) is sent from a reservoir directly into the fractional distillation column (1) by a piston pump with a flow rate of 1 mL/min.

The sCO₂ (12) is sent to the fractional distillation column (1) by a high-pressure diaphragm pump (able to deliver flow rates up to 12 kg/h) with a flow rate of 2.5 kg/h.

The ratio of sCO₂ flow rate on oil flow rate (sCO₂ flow rate/oil flow rate) is of 41.7.

The pressure and temperature in the countercurrent fractional distillation column are of 60°C and 120 bars or 180 bars.

The regenerated base oil is separated from the sCO₂ in the fraction recovered at the top of the distillation column.

### Evaluation of the purity of the lubricant compositions

### Visual assessment

The purity of the regenerated oil may be visually evaluated.

In particular, the regenerated oil before and after regeneration is poured into 10 mL flasks and observed visually for determining their color and aspect.

### Elemental analysis

The quality of the regenerated oil may be further assessed by elementary analysis, performed by Inductively Coupled Plasma mass spectrometry (ICP-MS).

### Example 1

A commercial marine cylinder lubricating composition is provided as "Reference 1".

The corresponding used lubricant composition (that correspond to the two-stroke marine drain oils collected on a ship) is recovered after use and provided as "Used lubricant 1".

A part of the Used lubricant 1 is regenerated by a process according to the invention, implementing the regenerating protocol detailed here-above, wherein the fractionation in the countercurrent column is operated at a temperature of 60°C and a pressure of 120 bars, to obtain the "Regenerated oil 1".

Another part of the Used lubricant 1 is regenerated by a process according to the invention, implementing the regenerating protocol detailed here-above, wherein the fractionation in the countercurrent column is operated at a temperature of 60°C and a pressure of 180 bars, to obtain the "Regenerated oil 2".

The purity of the Used lubricant 1 and of the regenerated oil 1 is assessed visually according to the protocol detailed here-above.

The results are given in the table below.

**[Tableau 2]**

| **Composition** | **Aspect** |
|---|---|
| Used Lubricant 1 | Very viscous black and opaque liquid |
| Regenerated oil 1 | Yellow and transparent oily liquid |

These results demonstrate that the oil regenerated through a process in accordance with the invention is purer than the used reference 1.

The purity of the Reference 1, of Used lubricant 1 and of the regenerated oils 1 and 2 is assessed by elemental analysis according to the protocol mentioned hereabove.

The results are given in the table below. The values are expressed in ppm.

**[Tableau 3]**

| **Element** | **Reference 1** | **Used Lubricant 1** | **Regenerated oil 1** | **Regenerated oil 2** |
|---|---|---|---|---|
| **Ag** | <1 | <1 | <1 | <1 |
| **Al** | 5 | 7 | <1 | <1 |
| **B** | <1 | <1 | <1 | 2 |
| **Ba** | <1 | <1 | <1 | <1 |
| **Ca** | 15140 | 15962 | <1 | <1 |
| **Cd** | <1 | <1 | <1 | <1 |
| **Co** | <1 | <1 | <1 | <1 |
| **Cr** | <1 | 1 | <1 | <1 |
| **Cu** | <1 | <1 | 7 | <1 |
| **Fe** | 7 | 16 | <1 | <1 |
| **K** | 2 | 2 | <1 | <1 |
| **Li** | <1 | <1 | <1 | <1 |
| **Mg** | 39 | 41 | <1 | <1 |
| **Mn** | 1 | 3 | <1 | <1 |
| **Mo** | <1 | <1 | <1 | <1 |
| **Na** | 4 | 17 | <1 | <1 |
| **Ni** | <1 | 21 | <1 | <1 |
| **P** | 3 | 26 | 25 | 111 |
| **Pb** | <1 | <1 | <1 | <1 |
| **Sb** | <1 | <1 | <1 | <1 |
| **Si** | 28 | 39 | 245 | 9 |
| **Sn** | <1 | <1 | <1 | <1 |
| **Ti** | <1 | <1 | <1 | <1 |
| **V** | <1 | 23 | <1 | <1 |
| **Zn** | 4 | 28 | <1 | <1 |

These results demonstrate that the oil regenerated through a process in accordance with the invention is purer than the used lubricant 1, and even purer than reference 1 itself.

In particular, Regenerated oils 1 and 2 exhibit reduced contents of most of the impurities, namely of metal and metalloid elements. This shows that regenerated oils 1 and 2 may be used as base oils, and supplemented with additives commonly used in the lubricating field to obtain ready-to-use lubricating compositions.

Advantageously, conducting the fractionation with sCO₂ countercurrent flow at 120 bars makes it possible significantly reducing the phosphorus content and conducting the fractionation with sCO₂ countercurrent flow at 180 bars makes it possible significantly reducing the silicon content.

### Example 2

A commercial heavy vehicle lubricating composition is provided as Reference 2.

The corresponding used lubricating composition is directly recovered after used from a heavy vehicle and provided as "Used lubricant 2".

The Used lubricant 2 is regenerated by a process according to the invention, implementing the regenerating protocol detailed here-above, wherein the fractionation in the countercurrent column is operated at a temperature of 60°C and a pressure of 120 bars, to obtain the "regenerated oil 3".

The purity of the Used lubricant 2 and the regenerated oil 3 is assessed visually according to the protocol detailed here-above.

The results are given in the table below.

**[Tableau 4]**

| **Composition** | **Aspect** |
|---|---|
| Used lubricant 2 | Very viscous black and opaque liquid |
| Regenerated oil 3 | Red and transparent oily liquid |

These results demonstrate that the oil regenerated through a process in accordance with the invention is purer than the used lubricant 2.

The purity of the Reference 2 and the regenerated oil 3 is assessed by elemental analysis according to the protocol mentioned hereabove.

The results are given in the table below. The values are expressed in ppm.

**[Tableau 5]**

| **Element** | **Reference 2** | **Regenerated oil 3** |
|---|---|---|
| **Ag** | <1 | <1 |
| **Al** | <1 | <1 |
| **B** | 139 | 27 |
| **Ba** | <1 | <1 |
| **Ca** | 1377 | <1 |
| **Cd** | <1 | <1 |
| **Co** | <1 | <1 |
| **Cr** | <1 | <1 |
| **Cu** | <1 | <1 |
| **Fe** | 1 | <1 |
| **K** | 1 | <1 |
| **Li** | <1 | <1 |
| **Mg** | 965 | <1 |
| **Mn** | <1 | <1 |
| **Mo** | 49 | <1 |
| **Na** | 2 | <1 |
| **Ni** | <1 | <1 |
| **P** | 763 | 38 |
| **Pb** | <1 | <1 |
| **Sb** | <1 | <1 |
| **Si** | 3 | 38 |
| **Sn** | <1 | <1 |
| **Ti** | <1 | <1 |
| **V** | 2 | <1 |
| **Zn** | 886 | <1 |

These results demonstrate that the oil regenerated through a process in accordance with the invention is purer than Reference 2. In particular, Regenerated oil 3 exhibits very low contents of impurities, namely of metal and metalloid elements. This shows that regenerated oil 3 may be used as base oil and supplemented with additives commonly used in the lubricating field to obtain a new ready-to-use lubricating composition.

## Claims

1. A process for regenerating a used lubricant composition, said process comprising the steps of:
- fractionating said used lubricant composition in a countercurrent fractional distillation column with a countercurrent flow of supercritical carbon dioxide (sCO₂),
wherein said used lubricant composition and supercritical CO₂ are fed in the countercurrent column with a ratio of the sCO₂ flow rate on used lubricant flow rate ranging from 15 to 50; and
- recovering the regenerated oil extracted within the supercritical CO₂.

2. The process as claimed in the preceding claim, in which the used lubricant composition (11) is introduced in the upper part of the column (1), while the supercritical CO2 (12) is fed from the bottom of the column (1), the regenerated oil extracted within the supercritical CO₂ being removed from the extract exiting column topside.

3. The process as claimed in any one of the preceding claims, in which the ratio of the sCO₂ flow rate on used lubricant flow rate ranges from 20 to 50, in particular from 25 to 45 and more particularly from 27 to 45.

4. The process as claimed in any one of the preceding claims, in which the fractionation is performed at a temperature ranging from 40°C to 200°C, in particular from 50°C to 150°C, preferably from 50°C to 100°C.

5. The process as claimed in any one of the preceding claims, in which the fractionation is performed at a pressure ranging from 50 to 300 bars, in particular from 100 to 250 bars, preferably from 100 to 200 bars.

6. The process as claimed in any one of the preceding claims, in which the regenerated oil is retrieved by eliminating supercritical CO₂, preferably by a simple pressure-let-down.

7. The process as claimed in any one of the preceding claims, in which the regenerated oil recovered from the fractionation is subjected to at least a subsequent second fractionation step in a countercurrent fractional distillation column with a countercurrent flow of supercritical carbon dioxide, said process comprising more particularly at least:
(a) a first step of fractionating the used lubricant composition in a countercurrent fractional distillation column with a countercurrent flow of sCO₂, then recovering the oil extracted within the sCO₂; and
(b) a second step of fractionating the oil retrieved from the first fractionation in a countercurrent fractional distillation column with a countercurrent flow of sCO₂, then recovering the final regenerated oil extracted within the sCO₂.

8. The process as claimed in the preceding claim, wherein the first and second fractionation steps are operated within the same fractional distillation column or within two different fractional distillation columns, that are for example arranged in series.

9. The process as claimed in claim 7 or 8, comprising at least:
- a first fractionation step performed at a temperature ranging from 40°C to 200°C, in particular from 50°C to 150°C, preferably of about 60°C; and at a pressure ranging from 50 to 150 bars, in particular from 100 to 150 bars, preferably of about 120 bars; and
- a second fractionation step performed at a temperature ranging from 40°C to 200°C, in particular from 50°C to 150°C, preferably of about 60°C; and at a pressure ranging from 150 to 300 bars, in particular from 160 to 200 bars, preferably of about 180 bars; the first and second fractionation steps being performed or not in this order.

10. A use of the process as defined in any one of claims 1 to 9 for regenerating an engine drain oil, in particular a two-stroke engine drain oil and more particularly a marine two-stroke engine drain oil.

11. A process for preparing a lubricant composition comprising at least the steps of:
(i) recovering a base oil from a used lubricant composition by implementing a process of regeneration as defined in any one of claims 1 to 9; and
(ii) adding to said regenerated base oil at least one additive, preferably chosen from friction modifying additives, extreme pressure additives, anti-wear additives, detergents, antioxidants, viscosity index (VI) improvers, pour point depressants (PPDs), dispersants, antifoaming agents, thickeners, and mixtures thereof.
